(19) Europäisches Patentamt
European Patent Office
Office européen des brevets

(11) **EP 1 444 768 B1**

(12) **FASCICULE DE BREVET EUROPEEN**

(45) Date de publication et mention
de la délivrance du brevet:
**28.09.2011 Bulletin 2011/39**

(21) Numéro de dépôt: **02800525.4**

(22) Date de dépôt: **04.10.2002**

(51) Int Cl.:
***H02M 3/158*** (2006.01)

(86) Numéro de dépôt international:
**PCT/BE2002/000152**

(87) Numéro de publication internationale:
**WO 2003/032476 (17.04.2003 Gazette 2003/16)**

(54) **PROCEDE ET DISPOSITIF DE TRANSFORMATION D'UNE TENSION CONTINUE, ET UTILISATION DU DISPOSITIF**

VERFAHREN UND EINRICHTUNG ZUR TRANSFORMATION EINER GLEICHSPANNUNG UND VERWENDUNG DER EINRICHTUNG

METHOD AND DEVICE FOR TRANSFORMING A DIRECT CURRENT VOLTAGE, AND USE OF SAID DEVICE

(84) Etats contractants désignés:
**AT BE BG CH CY CZ DE DK EE ES FI FR GB GR IE IT LI LU MC NL PT SE SK TR**

(30) Priorité: **05.10.2001 EP 01870214**

(43) Date de publication de la demande:
**11.08.2004 Bulletin 2004/33**

(73) Titulaire: **Constructions Electroniques + Telecommunications,**
**En abrégé "C.E.+T."**
**4020 Liège (Wandre) (BE)**

(72) Inventeurs:
• **FREBEL, Fabrice**
**B-4020 Wandre (BE)**
• **BLEUS, Paul**
**B-4020 Jupille (BE)**

(74) Mandataire: **De Groote, Christophe et al**
**Pecher Consultants SPRL**
**Centre Monnet - Avenue Jean Monnet, 1**
**1348 Louvain-la-Neuve (BE)**

(56) Documents cités:
EP-A- 0 632 571      DE-A- 2 739 387
US-A- 3 628 047      US-A- 4 245 286
US-A- 6 115 271

• **SABLE D M ET AL: "USE OF NONLINEAR DESIGN OPTIMIZATION TECHNIQUES IN THE COMPARISON OF BATTERY DISCHARGER TOPOLOGIES FOR THE SPACE-PLATFORM" PROCEEDINGS OF THE 25TH INTERSOCIETY ENERGY CONVERSION ENGINEERING CONFERENCE. IECEC-90. RENO, AUG. 12 - 17, 1990, PROCEEDINGS OF THE INTERSOCIETY ENERGY CONVERSION ENGINEERING CONFERENCE, NEW YORK, IEEE, US, vol. 1 CONF. 25, 12 août 1990 (1990-08-12), pages 358-364, XP000214666**
• **LABELLE J: "POWER ISOLATORS ARE BIDIRECTIONAL" EDN ELECTRICAL DESIGN NEWS, CAHNERS PUBLISHING CO. NEWTON, MASSACHUSETTS, US, vol. 34, no. 12, 8 juin 1989 (1989-06-08), page 203,205 XP000098659 ISSN: 0012-7515**

**Description**

La présente invention se rapporte à un procédé de transformation d'une tension continue de départ en une autre tension continue, notamment pour que l'autre tension continue vaille le double de la tension continue de départ.

De nombreux appareils électriques et électroniques, portables ou non, sont présentement alimentés à partir de sources de courant continu de préférence à des sources de courant alternatif, pour les motifs que l'homme de métier connaît.

Il y a de ce fait, et en conséquence, un besoin grandissant en procédés, dispositifs et/ou moyens simples et fiables de transformation d'un courant continu débité sous une tension continue déterminée de départ en un courant continu différent débité sous une tension continue d'une autre valeur. Un exemple de cette transformation est montré par le document US 4 245 286 correspondant au préambule des revendications 1 et 4. Cette transformation doit être faite avec un rendement parmi les meilleurs pour éviter entre autres une consommation inutile de courant se transformant en pertes calorifiques qu'il faut évacuer, pour réduire le poids du matériel mis en oeuvre, pour simplifier ce matériel et réduire par cela les risques de pannes. Des exemples de besoins de ce genre, qui constituent le but de la présente invention seront donnés ci-dessous mais les cas les plus typiques sont des doubleurs et/ou diviseurs de tension continue. La presente invention propose un procédé selon la revendication 1, un dispositif selon la revendication 4 et une utilisation selon les revendications 14 et 15.

A cet effet, la présente invention propose d'abord un procédé comprenant un choix d'un autotransformateur, ou montage semblable, qui comporte en son bobinage des première et seconde bornes extrêmes et une borne intermédiaire. Il est fait un branchement d'un pôle d'une source de la tension continue de départ à la borne intermédiaire, et un agencement d'un point commun relié par chaque fois une diode distincte, et/ou un commutateur auxiliaire distinct respectif, à chacune des deux bornes extrêmes. Il est fait ensuite un branchement de l'autre pôle de la source de tension continue de départ, d'une manière alternée et successive, à chacune des première et seconde bornes extrêmes prises séparément, et une collecte de l'autre tension continue entre ledit autre pôle et le point commun.

Le procédé suivant l'invention comporte aussi l'utilisation de commutateurs auxiliaires comme expliquée ci-après. Le procédé suivant l'invention peut comporter un lissage de l'autre tension continue par la disposition d'une bobine, suivant les explications ci-dessous.

L'invention concerne aussi un dispositif de transformation d'une tension continue de départ en une autre tension continue, destiné notamment à la mise en oeuvre du procédé précité.

Pour atteindre le but à la base de l'invention, le dispositif comprend un autotransformateur, ou montage semblable, comportant des première et seconde bornes extrêmes et une borne intermédiaire, agencées pour être reliées directement ou indirectement à deux pôles d'une source de tension continue de départ. Il est agencé à cet effet une liaison d'un des pôles de la source à la borne intermédiaire. Un premier commutateur d'alternance est disposé entre l'autre pôle de la source et la première borne extrême et un second commutateur d'alternance est disposé entre l'autre pôle de la source et la seconde borne extrême. Un commutateur auxiliaire distinct est monté entre chacune des deux bornes extrêmes et un point commun. Un moyen de commande des deux commutateurs d'alternance, et des deux commutateurs auxiliaires, leur est raccordé et est agencé pour rendre alternativement passant l'un des deux commutateurs d'alternance et simultanément l'autre bloquant et vice versa. L'autre tension continue est alors disponible entre ledit autre pôle et le point commun qui forment une sortie de courant du dispositif. Les deux commutateurs auxiliaires sont agencés également pour que l'un soit passant alors que l'autre est bloquant, et vice versa, en rapport avec la commande des deux commutateurs d'alternance.

Suivant une forme de réalisation, le dispositif de l'invention comporte chaque fois un commutateur auxiliaire précité disposé en parallèle avec chaque fois une diode qui relie une borne extrême respective au point commun.

Suivant une forme particulière de réalisation de l'invention, l'autotransformateur peut comporter de plus un premier bobinage auxiliaire branché entre ladite première borne extrême et le premier commutateur d'alternance, et un second bobinage auxiliaire branché entre ladite seconde borne extrême et le second commutateur d'alternance, afin de pouvoir adapter par cela le rapport de transformation.

L'invention concerne encore une utilisation particulière du dispositif précité, suivant sa forme de réalisation préférée.

Dans cette utilisation, on alimente ledit dispositif par ladite sortie de courant et à cet effet on applique une tension continue entre ledit autre pôle et, selon le cas, le point commun ou une connexion d'une bobine de lissage dont l'autre connexion est reliée au point commun. On organise, d'une part, une paire de commutateurs comportant ledit premier commutateur d'alternance, disposé entre l'autre pôle de la source et la première borne extrême, et le commutateur auxiliaire qui relie cette même borne et le point commun. On organise, d'autre part, une autre paire de commutateurs comportant ledit second commutateur d'alternance, disposé entre l'autre pôle de la source et la seconde borne extrême, et le commutateur auxiliaire qui relie cette borne extrême au point commun. On programme le moyen de commande des commutateurs pour rendre, en alternance, passants les commutateurs d'une paire et simultanément bloquants les commutateurs de l'autre paire et vice versa, et on collecte entre les deux pôles précités une tension continue de source de départ pour alimenter un autre dispositif.

D'autres détails et particularités de l'invention ressortiront des revendications secondaires et de la description des dessins qui sont annexés au présent mémoire et qui illustrent, à titre d'exemples non limitatifs, le procédé, des formes de réalisation particulières du dispositif et l'utilisation suivant l'invention.

La figure 1     montre une première variante d'un schéma de connexion suivant l'art antérieur.

La figure 2     montre une seconde variante du schéma de connexion suivant l'art antérieur.

La figure 3     montre un dispositif selon l'invention.

La figure 4     représente dans le temps t des niveaux d'impulsions de commande des commutateurs, des niveaux de courants passant à travers ces commutateurs et des niveaux de courant d'entrée et de sortie.

La figure 5     représente une utilisation d'un dispositif de l'invention en tant que diviseur de tension pour alimenter un onduleur.

La figure 6     représente une utilisation d'un dispositif de l'invention en tant que multiplicateur de tension pour alimenter le même onduleur.

La figure 7     représente dans le temps t, et dans deux réglages différents, des niveaux d'impulsions de commande des commutateurs et des niveaux de tensions obtenues.

La figure 8     montre une variante du schéma de connexion de la figure 3 utile pour comprendre une utilisation du dispositif de l'invention.

La figure 9     montre une autre variante construite à partir du schéma de connexion de la figure 2, pour obtenir d'autres rapports de multiplication de tension, cette variante n'étant pas partie de l'invention.

La figure 10    montre la variante de la figure 9 complétée par des protections contre des surtensions des semi-conducteurs.

La figure 11    montre un schéma construit à partir de celui de la figure 10 pour obtenir d'autres rapports de division de tension, ce schéma n'étant pas partie de l'invention.

Dans les différentes figures, les mêmes notations de référence désignent des éléments identiques ou analogues.

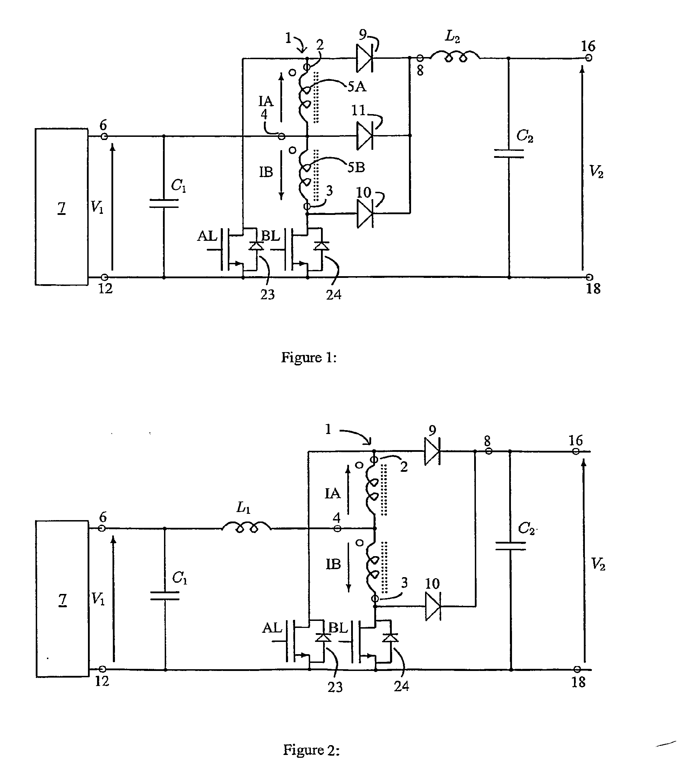

Le procédé connu pour la transformation (figure 1) d'une tension continue de départ V1 en une autre tension continue V2 comprend un choix d'un autotransformateur 1 comportant une première borne extrême 2, une seconde borne extrême 3 et une borne intermédiaire 4. Cela détermine dans cet autotransformateur 1 deux bobinages 5A et 5B qui sont branchés l'un entre la borne extrême 2 et la borne intermédiaire 4 et l'autre entre la borne intermédiaire 4 et l'autre borne extrême 3 et qui sont avantageusement égaux, de manière à pouvoir réaliser un montage symétrique décrit ci-après.

On branche à la borne intermédiaire 4 un pôle 6 d'une source 7, non représentée mais qui peut être de tout type connu, qui fournit la tension continue de départ V1.

On constitue un point commun 8 que l'on relie respectivement (figure 2) par une diode 9 à la borne extrême 2, par une diode 10 à la borne extrême 3 et éventuellement (figure 1) par une diode 11 à la borne intermédiaire 4.

On branche l'autre pôle 12 de la source de tension continue 7, d'une manière alternée et successivement à chacune des première et seconde bornes extrêmes 2 et 3 prises séparément, et on collecte l'autre tension V2 entre ledit autre pôle 12 et le point commun 8.

L'autotransformateur 1 peut comporter en fait plusieurs bornes extrêmes 2 et 3 (non représentées) disposées symétriquement par rapport à la borne intermédiaire 4 sur les deux bobinages 5A et 5B, de manière à ce que l'on puisse raccorder l'autotransformateur 1 à différentes tensions continues V1 en fonction de la source 7 raccordée, et délivrer une tension continue V2 en rapport à cette tension V1 et à un appareil utilisant la tension V2.

Tout autre appareil à induction qui procure un même fonctionnement que l'autotransformateur 1 et qui est utilisé à la place de celui-ci doit être considéré comme étant son équivalent technique.

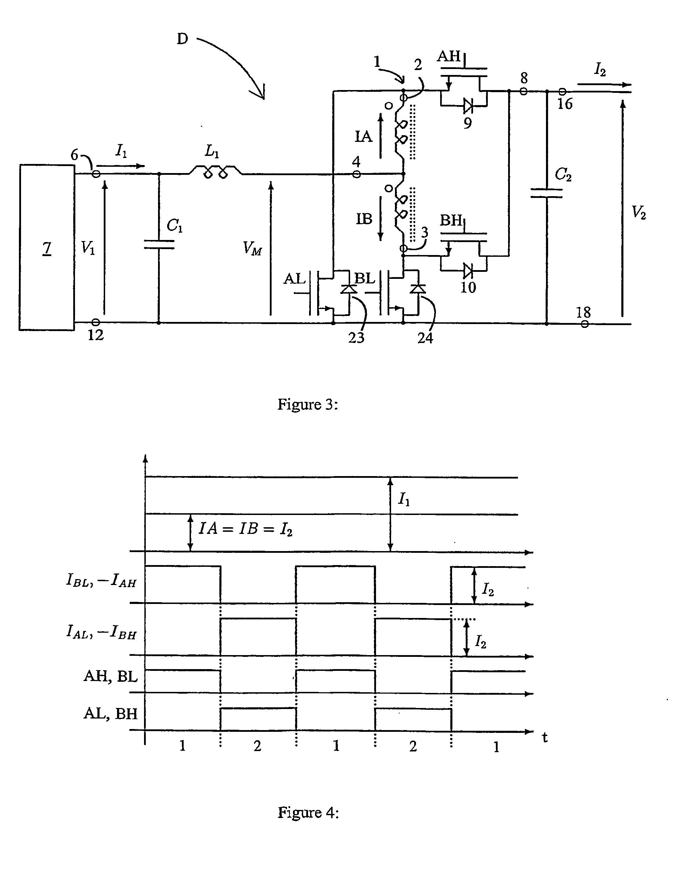

Dans une variante du procédé de l'invention, le point commun 8 est relié plutôt (figure 3) par un commutateur auxiliaire AH, BH distinct respectif à chacune des deux bornes 2, 3. Dans ce cas, lorsqu'on branche de manière alternée et successive :

-     l'autre pôle 12 à la seconde borne extrême 3, on rend passant le commutateur auxiliaire AH et bloquant l'autre commutateur auxiliaire BH et

-     l'autre pôle 12 à la première borne extrême 2, on rend bloquant le commutateur auxiliaire AH et passant l'autre commutateur auxiliaire BH.

A nouveau alors, l'autre tension continue V2 est collectée entre l'autre pôle 12 et le point commun 8.

Comme le montre la figure 3, une diode 9 précitée peut être branchée en parallèle au commutateur auxiliaire AH et une diode 10 peut être branchée en parallèle à l'autre commutateur auxiliaire BH, pour les motifs d'absorber des pointes de tension comme cela est connu dans le métier.

Avantageusement, on effectue un lissage de l'autre tension continue V2 par la disposition

-     soit d'une bobine L2 (figure 1) entre le point commun 8 et une borne 16 d'un appareil (non représenté) utilisant l'autre tension continue V2,

-     soit d'une bobine L1 (figure 2) entre la borne intermédiaire 4 et le pôle 6 associé de la source 7 de tension continue de départ,

- soit d'une bobine (non représentée) disposée dans la liaison entre le pôle 12 de la source de tension continue 7 et l'autre borne 18 de l'appareil utilisant l'autre tension V2.

Une combinaison de deux ou des trois bobines de lissage est aussi possible.

Pour mettre en oeuvre le procédé ci-dessus, il est proposé, dans l'art antérieur (figure 1 ou 2), un dispositif comprenant l'autotransformateur 1, ou un montage semblable tel que défini ci-dessus, qui comporte les première et seconde bornes extrêmes 2 et 3. La borne intermédiaire 4 précitée est reliée directement ou indirectement au pôle 6 de la source 7.

Un premier commutateur d'alternance AL est disposé entre l'autre pôle 12 de la source 7 et la première borne extrême 2. Un second commutateur d'alternance BL est disposé entre le même autre pôle 12 et la seconde borne extrême 3.

Comme indiqué ci-dessus, une diode 9, 10 respective est placée entre chacune des deux bornes extrêmes 2, 3 et un point commun 8.

Un moyen de commande non représenté mais connu dans le métier, tel qu'un microcontrôleur (microcontroller en anglais), est raccordé aux deux commutateurs d'alternance AL, BL et agencé pour rendre alternativement l'un passant et simultanément l'autre bloquant et vice versa.

L'autre tension continue V2 est disponible entre ledit autre pôle 12 et le point commun 8.

Les commutateurs d'alternance AL, BL sont avantageusement des transistors et en particulier du type MOSFET connu, pour suivre un rythme suffisant de commutation afin d'obtenir une tension continue V2 admissible par l'induction que provoque un bobinage 5A dans l'autre bobinage 5B et vice versa.

Deux diodes 23 et 24 peuvent être placées en parallèle respectivement avec le premier et le second commutateur d'alternance AL, BL. Dans un tel cas, ces commutateurs d'alternance AL, BL peuvent être du type IGBT également connu, dans lequel la diode 23, 24 est intégrée.

Comme le montre la figure 1, une diode auxiliaire 11 peut être disposée entre la borne intermédiaire 4 et le point commun 8. Cette diode 11 y a un rôle de "roue libre".

Le dispositif de l'invention comporte chaque fois, suivant la figure 3, un commutateur auxiliaire AH, BH qui remplace ou encore est disposé en parallèle avec chacune des deux diodes 9 et 10 respectives qui relient une borne extrême 2 ou respectivement 3 au point commun 8. Une explication de ce montage est donnée ci-après. Les commutateurs auxiliaires AH et BH peuvent être également avantageusement des transistors semblables à ceux mentionnés ci-dessus pour les commutateurs d'alternance AL et BL.

Les dessins schématisent à suffisance pour l'homme de métier la connexion des transistors et diodes mentionnés ainsi que des autres éléments qui composent le dispositif de l'invention dans ses variantes.

Une bobine de lissage L2 (figure 1), L1 (figures 2 et 3) ou autre peut être installée comme cela a déjà été expliqué ci-dessus ou comme l'homme de métier le connaît. Notamment dans le montage de la figure 1, des surtensions peuvent apparaître aux bornes des deux transistors AL et BL malgré la bobine L2, alors qu'avec la bobine L1 disposée suivant les figures 2 et 3, on obtient un blocage naturel du niveau de la tension aux bornes de ces mêmes transistors et la diode auxiliaire 11 n'est plus nécessaire.

Un condensateur C1, C2 peut être installé entre les deux pôles 6 et 12 de ladite source 7 et/ou entre ledit autre pôle 12 de celle-ci (ou la borne 18) et soit le point commun 8 soit, le cas échéant, à la borne 16 de l'appareil d'utilisation suivant la figure 1.

Un fonctionnement du dispositif suivant les figures 1 à 3 est expliqué en supposant qu'à la sortie de la source 7 le courant continu s'écoule du pôle 6 vers le pôle 12 de celle-ci.

Lors de chaque phase alternée pendant laquelle le commutateur d'alternance BL est passant et le commutateur d'alternance AL est bloquant, un courant IB s'écoule du pôle 6 par la borne intermédiaire 4, la bobine 5B, la borne extrême 3, vers le commutateur d'alternance BL et le pôle 12. Le courant IB dans la bobine 5B induit dans la bobine 5A un courant IA qui, en fonction du choix des sens d'enroulement réciproques des bobines 5A, 5B et de l'égalité de leurs autres paramètres, s'écoule en sens inverse dans la bobine 5A, de la borne 4 vers la borne 2, et y produit entre ces bornes 4 et 2 une tension qui est égale à celle V1 entre les pôles 6 et 12 et qui s'y ajoute. Le courant IA s'écoule alors du pôle 6 par la borne 4, la bobine 5A, la borne 2, la diode 9 et le point commun 8, jusqu'à la borne 16 de l'appareil d'utilisation, à travers celui-ci pour en sortir à sa borne 18 et revenir au pôle 12. La tension V2 obtenue aux bornes 16 et 18 de l'appareil d'utilisation vaut ainsi deux fois la tension V1 à la suite de cette addition. Le courant qui part du pôle 6 se divise en deux à la borne intermédiaire 4 : une moitié IB passe dans la bobine 5B et une moitié IA passe dans la bobine 5A. Le courant IA passant à travers l'appareil d'utilisation, par les bornes 16 et 18, est donc égal à la moitié du courant total qui quitte le pôle 6 et qui aboutit en retour au pôle 12.

Dans les mêmes conditions, lors de chaque phase alternée pendant lesquelles le commutateur d'alternance AL est passant et le commutateur d'alternance BL est bloquant, le courant s'écoule du pôle 6 par la borne intermédiaire 4, la bobine 5A, la borne extrême 2, vers le commutateur d'alternance AL et le pôle 12. Le courant IA dans la bobine 5A induit dans la bobine 5B un courant IB qui, en fonction du même choix des sens d'enroulement réciproques des bobines 5A, 5B et de l'égalité de leurs autres paramètres, s'écoule en sens inverse dans la bobine 5B, de la borne 4 vers la borne 3, et y produit entre ces bornes 4 et 3 une tension qui est égale à celle V1 entre les pôles 6 et 12 et qui s'y ajoute. Le courant IB s'écoule alors du pôle 6 par la borne 4, la bobine 5B, la borne 3, la diode 10 et le point commun 8, jusqu'à la borne 16 de l'appareil d'utilisation, à travers celui-ci pour en sortir à sa borne 18 et revenir au pôle 12. La tension V2 obtenue aux bornes 16 et 18 de l'appareil d'utilisation vaut ainsi encore deux fois la tension V1 à la suite de cette addition. Le courant I1 qui part du pôle 6 se divise donc à nouveau en deux à la borne intermédiaire 4 : une moitié IA passe dans la bobine 5A et une moitié IB passe dans la bobine 5B. Le courant IB passant à travers l'appareil d'utilisation, par les bornes 16 et 18, est donc égal à la moitié du courant total I1 qui quitte le pôle 6 et qui aboutit en retour au pôle 12, tandis que le courant I2 à la borne 16 de l'utilisation est formé par les impulsions successives alternées des courants IA et IB qui y sont égaux en grandeur et sens.

Dans le dispositif de l'invention montré dans la figure 3, les commutateurs BL et AH sont réglés passants ensemble, lorsque les commutateurs AL et BH sont réglés bloquants, ensemble et vice versa de manière alternée.

La figure 4 montre dans le temps et de bas en haut, en rapport avec le schéma de la figure 3,

- les successions des impulsions alternées de passage et de blocage des paires de commutateurs AL et BH d'une part AH et BL d'autre part,
- les successions des impulsions de courants passants, dans ces paires de commutateurs

  IAL des bornes 2 à 12 avec
  IBH des point commun 8 à borne 3,
  et
  IBL des bornes 3 à 12 avec
  IAH des point commun 8 à borne 2,

  (les signes "-" à la figure 4 indiquent que les courants IBH et IAH circulent en sens inverse dans leurs commutateurs de la figure 3 au moment où ils sont passants), et
- plus haut dans la figure 4, les niveaux des courants I2 et I1.

Il doit être entendu que l'invention n'est nullement limitée aux formes de réalisation décrites et que bien des modifications peuvent être apportées à ces dernières sans sortir du cadre des revendications.

Ainsi une autre utilisation du dispositif suivant la figure 3 s'est avérée très avantageuse de manière surprenante. Non seulement ce dispositif peut travailler en multiplicateur, ou précisément en doubleur de tension, comme expliqué ci-dessus, mais aussi en diviseur de tension.

A cet effet, on peut alimenter ledit dispositif en y appliquant une tension continue V2 entre ledit autre pôle 12, notamment par l'intermédiaire de la borne18 et, selon le cas, le point commun 8 (tel que représenté à la figure 3) ou une connexion d'une bobine de lissage (non représentée à la figure 3) dont l'autre connexion est alors reliée audit point commun 8.

Dans cette autre utilisation, on organise alors une paire de commutateurs comportant ledit second commutateur d'alternance BL, disposé entre l'autre pôle 12 de la source 7 et la seconde borne extrême 3, et le commutateur auxiliaire AH qui relie la borne extrême 2 et le point commun 8. De même, une autre paire de commutateurs comporte ledit premier commutateur d'alternance AL, disposé entre l'autre pôle 12 de la source 7 et la première borne extrême 2, et le commutateur auxiliaire BH qui relie la borne extrême 3 au point commun 8.

On programme dans ce cas le moyen de commande précité des commutateurs pour rendre, simultanément et en alternance, passants les commutateurs d'une paire et bloquants les commutateurs de l'autre paire ci-dessus, et vice versa. On collecte aux pôles 6 et 12 précités une tension continue de source de départ pour alimenter un autre dispositif branché alors à ces pôles 6 et 12. L'homme de métier peut aisément inverser les explications données pour l'utilisation du dispositif de la figure 3 en tant que doubleur de tension afin de comprendre le présent fonctionnement en tant que diviseur de tension.

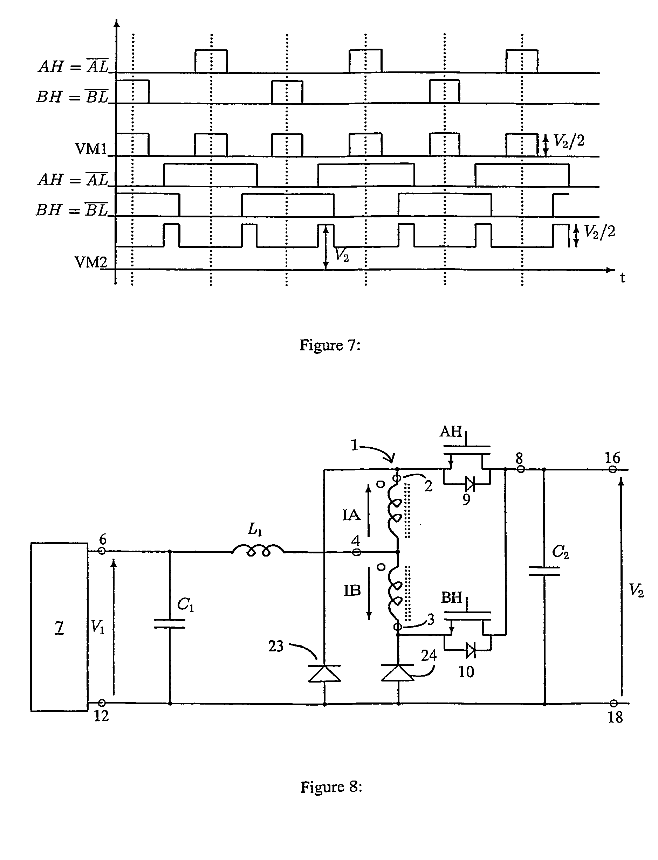

A l'examen de cette utilisation particulière de l'invention, il peut apparaître que, si les diodes 23 et 24 du schéma de la figure 3 sont correctement dimensionnées, les commutateurs d'alternance AL et BL qui leur sont parallèles peuvent être soit maintenus bloquants soit même être supprimés pour obtenir un schéma suivant la figure 8. Il suffit alors que le moyen de commande des commutateurs soit programmé pour rendre simultanément le commutateur auxiliaire AH passant et le commutateur BH bloquant et ensuite inversement le commutateur AH bloquant et le commutateur BH passant et ainsi de suite en alternance pour obtenir la tension réduite V1 aux pôles 6 et 12 à partir de la tension V2.

On constate une symétrie certaine entre la figure 2 d'un schéma de multiplicateur et la figure 8 d'une schéma de diviseur.

Comme le constatera l'homme de métier, une tension d'entrée (V1 ou V2) modulée donnera avec les circuits des figures 1, 2, 3 et 8 une tension de sortie (V2 ou respectivement V1) modulée. De même, une modulation du rapport cyclique permet de moduler une tension de sortie (V2 ou V1) pour une tension d'entrée (V1 ou respectivement V2) constante.

Pour mémoire, l'objectif du dispositif de l'invention, en particulier suivant la figure 3, n'est pas de réguler la tension de sortie ou autre tension V2 mais de doubler la valeur de la tension de départ V1 dans un sens ou, pris dans l'autre sens, de diviser la tension V2 par deux. Le rapport cyclique (duty cycle en anglais) des commutateurs est alors réglé pour être très près de 50 %, ce rapport cyclique étant le rapport entre le temps de conduction d'une paire de commutateurs de la figure 3 et une période de commutation totale.

Si l'on modifie ce rapport cyclique de conduction des commutateurs, on modifie le rapport de transformation du dispositif D de l'invention dans une plage de 0 à 2 dans un montage en multiplicateur et dans une plage de 0 à 0,5 lorsque le même dispositif D est utilisé en diviseur de tension.

Dans l'exposé ci-dessus, on ne tient pas compte du courant de magnétisation de l'autotransformateur 1 qui est considéré comme négligeable.

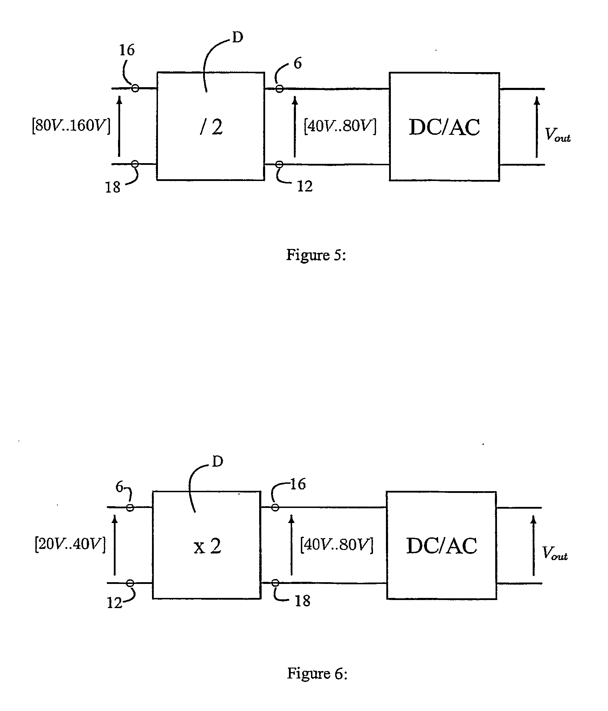

Les figures 5 et 6 montrent un exemple typique d'utilisation du dispositif D de l'invention qui alimente un même onduleur DC/AC à alimenter avec une tension continue entre 40 et 80 VDC.

Selon que le dispositif D construit suivant la figure 3 est branché dans un sens (figure 5) en diviseur ou dans l'autre sens (figure 6), en doubleur de tension, le même onduleur, donné à titre d'exemple peut être alimenté (figure 5) au départ d'une tension de 80 à 160 volts ou (figure 6) au départ d'une tension de 20 à 40 volts, par l'intermédiaire du même dispositif D, en inversant les entrée et sortie de celui-ci. Il est connu que pour un montage de ce genre il faut un rendement très élevé, égal ou supérieur à 97 %.

Parmi d'autres avantages obtenus grâce au dispositif de l'invention, outre celui qui vient d'être expliqué, il y a les suivants.

Les courants continus IA, IB qui circulent dans les bobinages 5A, 5B n'y provoquent pas l'effet pelliculaire connu dans les conducteurs de ceux-ci. En conséquence, les sections de leurs fils peuvent être réduites par rapport à un transformateur en courant haché de même puissance, grâce à cette meilleure utilisation des sections de fils.

Les bobinages 5A, 5B ne sont traversés que par les courants IA et IB et non par le courant total I1 et cela permet aussi de réduire les sections de leurs fils.

Les commutateurs à semi-conducteurs ne sont soumis eux aussi qu'aux courants IA et IB réduits, et non au courant total I1 et cela réduit énergiquement les pertes caloriques dans ces commutateurs, comme le sait l'homme de métier.

Lorsque le rapport cyclique de fonctionnement des commutateurs est de 0,5, les courants I1 et I2 sont pratiquement continus et cela permet de réduire les mesures et matériel nécessaires pour filtrer ces courants.

Le dispositif de l'invention donne une évolution symétrique des potentiels lors des commutations, aux bornes 2 et 3, et cela diminue considérablement le mode commun résultant (rayonnement électromagnétique réduit). Le niveau de bruit qui en résulte peut donc être très bas.

Ledit dispositif permet un fonctionnement en "Zero Voltage Switching" ou commutation sous tension nulle. Pour un dispositif de petite puissance, il suffit de tolérer un courant de magnétisation triangulaire dans l'autotransformateur 1. Pour de fortes puissances, une mise en parallèle déphasée de deux dispositifs identiques de l'invention permet d'atteindre une commutation douce en conservant des courants continus.

D'expérience de laboratoire, il s'avère que le rendement global d'un dispositif de l'invention est élevé et peut atteindre 98 %.

Il résulte des avantages cités qu'entre autre le facteur de dimensionnement de l'autotransformateur 1 peut être réduit de moitié pour des puissances élevées par rapport à un autotransformateur de même puissance, utilisé avec un courant haché.

Le dispositif D de la figure 3 peut être avantageusement utilisé en diviseur de tension pour obtenir de basses tensions (2,1 V, 3, 3 V, ...) avec un courant élevé, notamment pour l'alimentation de processeurs. Les courants traités par les commutateurs à semi-conducteurs n'étant aussi que de la moitié de la valeur du courant sortant, les pertes dans les commutateurs de type MOSFET entre autres sont réduites par quatre.

Le dispositif D de la figure 3 peut être aussi utilisé en diviseur de tension avec modulation (ou commande particulière) du cycle de fonctionnement des commutateurs.

La figure 7 montre à cet effet de haut en bas deux cas à réglages différents, en fonction du temps t.

Dans le haut de la figure 7, les commutateurs auxiliaires AH et BH reçoivent du moyen de commande des impulsions de commande passant/bloquant d'un type réduit. Les impulsions pour les commutateurs auxiliaires AH et BH sont déphasées de 180°. Les impulsions des commutateurs d'alternance AL et BL sont données de manière complémentaire à celles de AH et respectivement BH. Il en résulte une tension VM1, entre la borne intermédiaire 4 (voir VM, figure 3) et l'autre pôle 12, égale à V2/2 en pointe, avec une amplitude de V2/2 à partir d'une seuil constant à niveau 0.

Dans le bas de la figure 7, les mêmes commutateurs que ci-dessus reçoivent du moyen de commande des impulsions plus longues (cycle de fonctionnement plus important), dans un même ordre que ci-dessus. Il en résulte une tension VM2, entre les mêmes borne 4 et pôle 12 (voir VM, figure 3), égale à V2 en pointe, avec une amplitude de V2/2 à partir d'un seuil constant à un niveau V2/2.

Cette propriété de l'amplitude de la tension VM modulée est très intéressante; par exemple elle permet de réduire la taille d'une bobine de lissage dans un onduleur. Ce montage permet de réaliser très simplement un onduleur de niveaux multiples. Dans ce cas, la tension V1 n'est plus continue mais variable. La notion de tension continue telle qu'utilisée dans cette description doit être prise au sens très large du terme. Le mot "continu" est employé par opposition au mot "alternatif", les tensions V1 et V2 ne sont continues que si on les regarde sur une échelle de temps égale à celle de la période de commutation. Sur une échelle de temps plus large, ces tensions peuvent bien sûr varier.

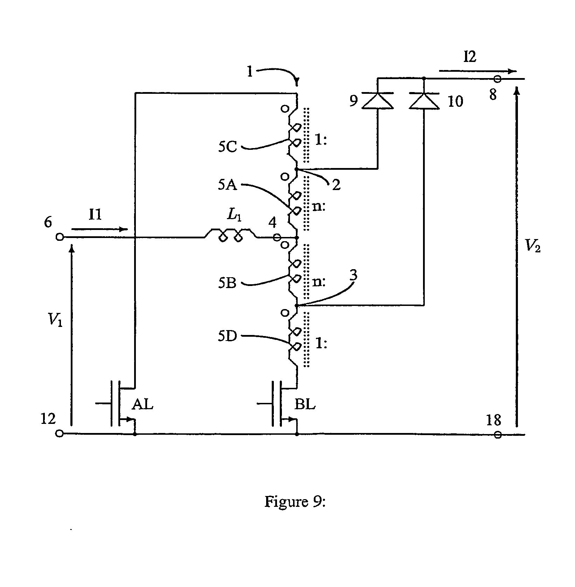

Afin d'augmenter les possibilités de choix du rapport de transformation du dispositif, le schéma suivant la figure 2 peut être complété comme suit pour obtenir le schéma de la figure 9.

L'autotransformateur 1 est équipé à cet effet, sur le même noyau, de deux bobinages auxiliaires 5C et 5D disposés suivant la figure 9. C'est-à-dire qu'un premier bobinage auxiliaire 5C est branché entre ladite première borne extrême 2 et le premier commutateur d'alternance AL, et un second bobinage auxiliaire 5D est branché entre ladite seconde borne extrême 3 et le second commutateur d'alternance BL.

Si les deux bobinages auxiliaires 5C et 5D ont chacun un nombre m de spires et les deux bobines 5A et 5B ont chacune un nombre de spires égal à m x n (n étant un nombre quelconque entier ou fractionnaire), les tensions d'entrée V1 et de sortie V2 sont liées par la relation :

$$V2 = (1 + 2n) \; V1/(1 + n).$$

Le rapport n/1 du nombre de spires entre chaque bobinage et bobine des parties A et B de l'autotransformateur 1 est exprimé par le nombre "1" ou "n" écrit à son côté dans les figures 9 et suivantes.

Si elle est souhaitée dans le montage de la figure 9, la bobine de lissage L1 doit être disposée entre ladite borne intermédiaire 4 et le pôle 6 associé de la source de tension continue de départ V1.

Il est prudent et conseillé de compléter le circuit de la figure 9 par un montage de protection contre une surtension pour au moins l'un, et de préférence pour chacun, des premier et second commutateurs d'alternance AL, BL et/ou desdites diodes distinctes 9, 10. En effet, ces diodes et transistors ne sont pas connectés à la même sortie de l'autotransformateur 1 et ne se protègent donc pas l'un(e) l'autre contre des surtensions.

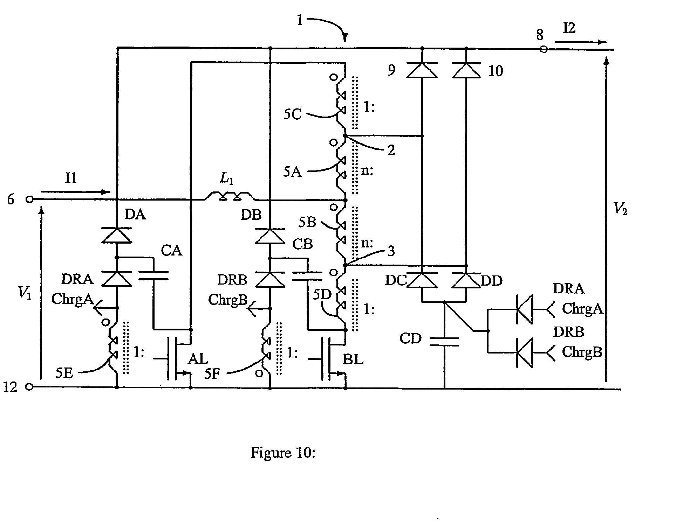

Pour obtenir un fonctionnement sûr et fiable, ainsi qu'une efficacité accrue, il est proposé de disposer les moyens suivants de limitation (= clamping en anglais) de la tension aux bornes de ces semi-conducteurs, selon la figure 10.

Pour une protection contre une surtension à l'endroit du commutateur d'alternance AL (ou BL), il est proposé un montage en série comportant un condensateur CA (ou respectivement CB) et une diode DA (ou resp. DB) et dont le côté cathodique est raccordé audit point commun 8 tandis que le côté anodique est raccordé au pôle du commutateur d'alternance AL (ou resp. BL) raccordé à la borne extrême 2 (ou resp. 3) par un bobinage auxiliaire 5C (ou resp. 5D) de l'autotransformateur 1.

A ce stade de l'explication donnée, il apparaît que l'ordre entre condensateur et diode d'un montage en série peut être indifférent. Un ordre préféré sera indiqué ci-après.

Pour une protection contre une surtension à l'endroit de la diode distincte 9 (ou 10), il est proposé un montage en série comportant un condensateur CD et une diode DC (ou respectivement DD) et dont le côté anodique est raccordé audit autre pôle 12 de la source de tension continue V1 alors que le côté cathodique est raccordé à la borne extrême 2 (ou resp. 3).

A noter que, bien que la figure 10 montre un condensateur CD commun aux deux diodes DC et DD il pourrait cependant y avoir un condensateur CD distinct pour chacune des diodes DC et DD. Dans ce cas aussi, l'ordre entre condensateur et diode d'un montage en série pourrait être indifférent. Un ordre préféré sera également indiqué ci-après.

Pour que ledit fonctionnement du circuit de la figure 10 ne soit pas intempestivement interrompu à la suite d'une action de l'une ou l'autre protection précitée, il y a lieu de prévoir un moyen de remise à l'état du ou de préférence des condensateurs de protection CA, CB, CD à chaque période de commutation. A cet effet, l'ordre entre condensateur et diode d'un même montage en série susdit de protection a de l'importance. Le ou chaque condensateur CA, CB, CD du montage en série correspondant est relié du côté électriquement le plus près dudit autre pôle 12 tandis que la diode DA, DB, DC, DD associée est reliée électriquement, selon le cas représenté à la figure 10, directement ou indirectement au point commun 8.

Le moyen de remise à l'état peut comporter, pour chaque paire formée par un commutateur d'alternance AL (ou BL) et la diode distincte 9 (ou resp. 10) susdite associée un bobinage de charge 5E (ou respectivement 5F) raccordé d'un côté audit autre pôle 12 et de l'autre côté à une anode d'une diode DRA (ou resp. DRB) dont la cathode est reliée, dans le montage en série concerné, à la jonction entre le condensateur CA (ou resp. CB, ou CD) et la diode DA (ou resp. DB, ou DC, ou DD) respective.

La remise à l'état des condensateurs de protection consiste en fait en une charge de ceux-ci.

Les bobinages de charge 5E et 5F sont montés sur, et donc alimentés par, le noyau de l'autotransformateur 1. A noter aux différentes figures le signe "°" à côté de chaque bobine ou bobinage 5 pour indiquer le sens de celui-ci. Il apparaît ainsi que tous ont le même sens à l'exception du bobinage 5F pour des motifs de polarité évidents pour l'homme du métier.

A la figure 10, il peut donc y avoir deux diodes DRA (ou DRB) raccordées au même bobinage de charge 5E (ou respectivement 5F), l'une pour le condensateur CA (ou respectivement CB) et l'autre, via la flèche ChrgA (ou respectivement ChrgB), pour le condensateur CD (qui pourrait être doublé comme expliqué ci-dessus).

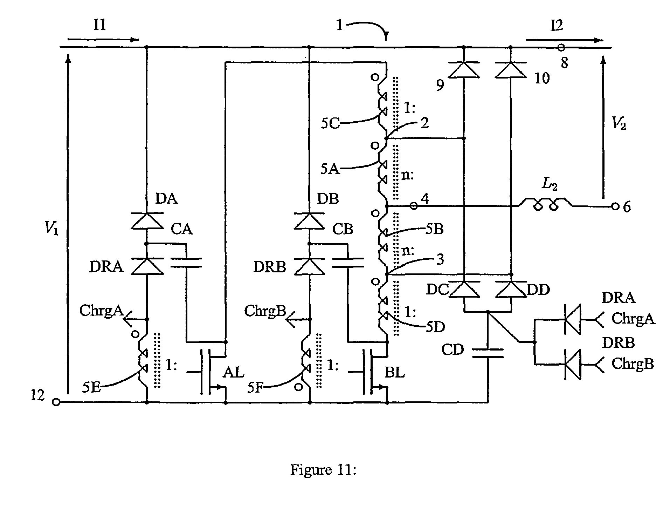

La figure 11 montre que le circuit de la figure 10, qui est présenté en tant que multiplicateur de tension, peut aisément être exploité aussi pour former un diviseur de tension, en alimentant la tension d'entrée V1 entre ledit autre pôle 12 et le point commun 8 et en prélevant la tension de sortie V2 entre ce même point commun 8 et la borne intermédiaire 4 ou de préférence la bobine de lissage L2 à la borne 6.

La tension de sortie dudit diviseur de tension suivant la figure 11 ressort de la relation suivante :

$$V2 = n \times V1/(1 + 2n).$$

Le chiffre "1" à côté des bobinages de charge 5E et 5F indique que ceux-ci ont avantageusement le même nombre de spires que les bobinages auxiliaires 5C et 5D respectifs.

Avantageusement par rapport au circuit de la figure 9, celui de la figure 10 ou 11 évite des pertes dues aux inductances de fuites de l'autotransformateur 1 mais au contraire restaure l'énergie de ces inductances de fuites.

## Revendications

1. Procédé de transformation d'une tension continue de départ (V1) en une autre tension continue (V2), notamment pour que l'autre tension continue (V2) vaille le double de la tension continue de départ (V1), le procédé comprenant :

    - un choix d'un autotransformateur (1), comportant des première et seconde bornes extrêmes (2,3) et une borne intermédiaire (4),
    - un branchement d'un pôle (6) d'une source (7) de la tension continue de départ (V1) à la borne intermédiaire (4),
    - un agencement d'un point commun (8) relié à chacune des deux bornes extrêmes (2,3),
    - un branchement de l'autre pôle (12) de la source (7) de tension continue de départ (V1), d'une manière alternée et successive, à chacune des première et seconde bornes extrêmes (2,3),
    - une collecte de l'autre tension continue (V2) entre ledit autre pôle (12) et le point commun (8),

    **caractérisé en ce que** ledit point commun (8) est relié à chacune des deux bornes extrêmes (2,3) par chaque fois un commutateur auxiliaire distinct (AH, BH) respectif, et **en ce que**, simultanément au branchement alterné et successif de l'autre pôle de la source (7) de tension continue de départ (V1), chaque commutateur auxiliaire (AH, BH) est actionné de manière alternée pour que l'un (AH) soit passant et l'autre (BH) bloquant lors du branchement de l'autre pôle (12) à la seconde borne extrême (3) et pour que l'un (AH) soit bloquant et l'autre (BH) passant lors du branchement de l'autre pôle (12) à la première borne extrême (2).

2. Procédé suivant la revendication 1, **caractérisé en**

ce qu'il comporte un lissage de l'autre tension continue (V2) par la disposition d'une bobine (L2, L1) :

    - soit entre le point commun (8) et une borne (16) d'un appareil d'utilisation de l'autre tension continue (V2),
    - soit entre la borne intermédiaire (4) de l'autotransformateur (1) et le pôle (6) associé de la source (7) de tension continue de départ (V1),
    - soit entre une borne (18) d'un appareil d'utilisation de l'autre tension continue (V2) et l'autre pôle (12) de la source (7) de tension continue de départ (V1) relié alternativement auxdites deux bornes extrêmes (2,3).

3. Procédé suivant l'une ou l'autre des revendications 1 et 2, **caractérisé par** un branchement d'une diode (11) entre la borne intermédiaire (4) et le point commun (8).

4. Dispositif de transformation d'une tension continue de départ (V1) en une autre tension continue (V2), destiné notamment à la mise en oeuvre du procédé suivant l'une quelconque des revendications 1 à 3, le dispositif comprenant

    - un autotransformateur (1) comportant des première et seconde bornes extrêmes (2,3) et une borne intermédiaire (4), agencées pour être reliées à deux pôles (6,12) d'une source (7) de tension continue de départ (V1),
    - une liaison d'un des pôles (6) de la source (7) à la borne intermédiaire (4),
    - un premier commutateur d'alternance (AL) disposé entre l'autre pôle (12) de la source (7) et la première borne extrême (2),
    - un second commutateur d'alternance (BL) disposé entre l'autre pôle (12) de la source (7) et la seconde borne extrême (3),
    - un moyen de commande des deux commutateurs d'alternance (AL, BL), agencé pour rendre alternativement et successivement l'un passant et simultanément l'autre bloquant et vice versa,

    dans lequel l'autre tension continue (V2) est disponible entre ledit autre pôle (12) et le point commun (8),
    **caractérisé en ce qu'**il comporte aussi un commutateur auxiliaire distinct (AH, BH) entre chacune des deux bornes extrêmes (2,3) et un point commun (8), le moyen de commande étant agencé pour rendre alternativement les deux commutateurs auxiliaires (AH, BH) l'un passant pendant que l'autre soit bloquant, et vice versa, en rapport avec la commande des deux commutateurs d'alternance (AL, BL).

5. Dispositif suivant la revendication 4, **caractérisé en ce qu'**il comporte chaque fois une diode (23,24) en parallèle avec le premier et le second commutateur d'alternance (AL, BL).

6. Dispositif suivant l'une ou l'autre des revendications 4 et 5, **caractérisé en ce qu'**il comporte une diode auxiliaire (11) disposée entre la borne intermédiaire (4) et le point commun (8).

7. Dispositif suivant l'une ou l'autre des revendications 4 et 5, **caractérisé en ce que** chaque commutateur auxiliaire (AH, BH) est disposé respectivement en parallèle avec une des deux diodes (9,10) qui relient aussi une borne extrême (2,3) au point commun (8).

8. Dispositif suivant l'une quelconque des revendications 4 à 7, **caractérisé en ce qu'**il comporte une bobine de lissage (L2, L1) :

    - soit entre le point commun (8) et une borne (16) d'un appareil d'utilisation de l'autre tension continue (V2),
    - soit entre la borne intermédiaire (4) de l'autotransformateur (1) et le pôle (6) associé de la source (7) de tension continue de départ (V1),
    - soit entre une borne (18) d'un appareil d'utilisation de l'autre tension continue (V2) et l'autre pôle (12) de la source (7) de tension continue de départ (V1), qui est relié alternativement auxdites deux bornes extrêmes (2,3).

9. Dispositif suivant l'une quelconque des revendications 4 à 8, **caractérisé en ce qu'**il comporte un condensateur (C1, C2) entre les deux pôles (6,12) de ladite source (7) et/ou entre ledit autre pôle (12) de celle-ci et le point commun (8) ou, le cas échéant, une connexion d'une bobine de lissage (L2) dont l'autre connexion est reliée audit point commun (8).

10. Dispositif suivant la revendication 4 ou 5, **caractérisé en ce que** l'autotransformateur (1) comporte de plus :

    - un premier bobinage auxiliaire (5C) branché entre ladite première borne extrême (2) et le premier commutateur d'alternance (AL), et
    - un second bobinage auxiliaire (5D) branché entre ladite seconde borne extrême (3) et le second commutateur d'alternance (BL).

11. Dispositif suivant la revendication 10, **caractérisé en ce qu'**il comporte une bobine de lissage (L1) entre ladite borne intermédiaire (4) et le pôle (6) associé de la source de tension continue de départ (V1).

12. Dispositif suivant l'une ou l'autre des revendications 10 et 11, **caractérisé en ce qu'**il comporte de plus un montage de protection contre une surtension pour au moins l'un, et de préférence pour chacun, des premier et second commutateurs d'alternance (AL, BL).

13. Dispositif suivant la revendication 12, **caractérisé en ce que**, pour une protection contre une surtension à l'endroit d'un commutateur d'alternance (AL, BL), il est prévu un montage en série comportant un condensateur (CA, CB) et une diode (DA, DB) et dont le côté cathodique est raccordé audit point commun (8) et dont le côté anodique est raccordé au pôle du commutateur d'alternance (AL, BL) raccordé à la borne extrême (2,3) correspondante par un bobinage auxiliaire (5C, 5D) de l'autotransformateur (1).

14. Utilisation du dispositif suivant l'une quelconque des revendications 7 à 9, **caractérisée en ce que** : on alimente ledit dispositif en appliquant une tension continue (V2) entre ledit autre pôle (12) et, selon le cas, le point commun (8) ou une connexion d'une bobine de lissage (L2) dont l'autre connexion est reliée audit point commun (8), on organise

    - une paire de commutateurs comportant ledit second commutateur d'alternance (BL), disposé entre l'autre pôle (12) de la source (7) et la seconde borne extrême (3), et le commutateur auxiliaire (AH) qui relie la première borne extrême (2) et le point commun (8), et
    - une autre paire de commutateurs comportant ledit premier commutateur d'alternance (AL), disposé entre l'autre pôle (12) de la source (7) et la première borne extrême (2), et le commutateur auxiliaire (BH) qui relie la seconde borne extrême (3) au point commun (8), on programme le moyen de commande des commutateurs pour rendre, simultanément et en alternance, passants les commutateurs d'une paire et bloquants les commutateurs de l'autre paire et vice versa, et
    - on collecte aux pôles (6,12) précités une tension continue de source de départ (V1) pour alimenter un autre dispositif.

15. Utilisation du dispositif suivant l'une quelconque des revendications 7 à 9, **caractérisé en ce que** : on alimente ledit dispositif en appliquant une tension continue (V2) entre ledit pôle (12) et, selon le cas, le point commun (8) ou une connexion d'une bobine de lissage (L2) dont l'autre connexion est relié audit point commun (8), soit on supprime les deux commutateurs d'alternance (AL, BL) soit on les maintient bloquants, on programme le moyen de commande des commutateurs pour rendre, simultanément et en alternance, passant un commutateur auxiliaire (AH, BH) et bloquant l'autre commutateur auxiliaire (BH, AH) et vice versa, et on collecte aux pôles (6,12) précités une tension continue de source de départ (V1) pour alimenter un autre dispositif.

**Claims**

1. Method for transforming a starting direct current voltage (V1) into another direct current voltage (V2), in particular so that the other direct current voltage (V2) is twice the starting direct current voltage (V1), the method comprising:

   - a choice of an autotransformer (1), comprising first and second extreme terminals (2, 3) and an intermediate terminal (4),
   - connection of a pole (6) of a source (7) of the starting direct current voltage (V1) to the intermediate terminal (4),
   - an arrangement of a common point (8) at each of the two extreme terminals (2, 3),
   - a connection of the other pole (12) of the source (7) of starting direct current voltage (V1), alternately and successively, to each of the first and second extreme terminals (2, 3),
   - a collection of the other direct current voltage (V2) between said other pole (12) and the common point (8), **characterized in that** said common point (8) is linked to each of the two extreme terminals (2, 3) each time by a respective different auxiliary switch (AH, BH), and **in that**, simultaneously with the alternate and successive connection of the other pole of the source (7) of starting direct current voltage (V1), each auxiliary switch (AH, BH) is actuated alternately so that one (AH) is on and the other (BH) off upon the connection of the other pole (12) to the second extreme terminal (3) and so that one (AH) is off and the other (BH) on upon the connection of the other pole (12) to the first extreme terminal (2).

2. Method according to Claim 1, **characterized in that** it includes a smoothing of the other direct current voltage (V2) by the positioning of a coil (L2, L1):

   - either between the common point (8) and a terminal (16) of a load appliance using the other direct current voltage (V2),
   - or between the intermediate terminal (4) of the autotransformer (1) and the associated pole (6) of the source (7) of starting direct current voltage (V1),
   - or between a terminal (18) of a load appliance using the other direct current voltage (V2) and the other pole (12) of the source (7) of starting direct current voltage (V1) linked alternately to said two extreme terminals (2, 3).

3. Method according to one or other of Claims 1 and 2, **characterized by** a connection of a diode (11) between the intermediate terminal (4) and the common point (8).

4. Device for transforming a starting direct current voltage (V1) into another direct current voltage (V2), intended in particular for the implementation of the method according to any one of Claims 1 to 3, the device comprising

   - an autotransformer (1) having first and second extreme terminals (2, 3) and an intermediate terminal (4), arranged to be linked to two poles (6, 12) of a source (7) of starting direct current voltage (V1),
   - a link from one of the poles (6) of the source (7) to the intermediate terminal (4),
   - a first alternating switch (AL) positioned between the other pole (12) of the source (7) and the first extreme terminal (2),
   - a second alternating switch (BL) positioned between the other pole (12) of the source (7) and the second extreme terminal (3),
   - a means for controlling the two alternating switches (AL, BL), arranged to alternately and successively render one on and simultaneously the other off and vice versa,

   in which the other direct current voltage (V2) is available between said other pole (12) and the common point (8),
   **characterized in that** it also comprises a separate auxiliary switch (AH, BH) between each of the two extreme terminals (2, 3) and a common point (8), the control means being arranged to alternately render one of the two auxiliary switches (AH, BH) on while the other is off, and vice versa, in relation to the control of the two alternating switches (AL, BL).

5. Device according to Claim 4, **characterized in that** it includes, each time, a diode (23, 24) in parallel with the first and the second alternating switches (AL, BL).

6. Device according to one or other of Claims 4 and 5, **characterized in that** it includes an auxiliary diode (11) positioned between the intermediate terminal (4) and the common point (8).

7. Device according to one or other of Claims 4 and 5, **characterized in that** each auxiliary switch (AH, BH) is respectively positioned in parallel with one of the two diodes (9, 10) which also link an extreme terminal (2, 3) to the common point (8).

8. Device according to any one of Claims 4 to 7, **characterized in that** it includes a smoothing coil (L2, L1):

- either between the common point (8) and a terminal (16) of a load appliance using the other direct current voltage (V2),
- or between the intermediate terminal (4) of the autotransformer (1) and the associated pole (6) of the source (7) of starting direct current voltage (V1),
- or between a terminal (18) of a load appliance using the other direct current voltage (V2) and the other pole (12) of the source (7) of starting direct current voltage (V1), which is linked alternately to said two extreme terminals (2, 3).

9. Device according to any one of Claims 4 to 8, **characterized in that** it includes a capacitor (C1, C2) between the two poles (6, 12) of said source (7) and/or between said other pole (12) thereof and the common point (8) or, where appropriate, a connection of a smoothing coil (L2) whose other connection is linked to said common point (8).

10. Device according to Claim 4 or 5, **characterized in that** the autotransformer (1) also includes:

   - a first auxiliary winding (5C) connected between said first extreme terminal (2) and the first alternating switch (AL), and
   - a second auxiliary winding (5D) connected between said second extreme terminal (3) and the second alternating switch (BL).

11. Device according to Claim 10, **characterized in that** it includes a smoothing coil (L1) between said intermediate terminal (4) and the associated pole (6) of the source of starting direct current voltage (V1).

12. Device according to one or other of Claims 10 and 11, **characterized in that** it also includes overvoltage protection circuitry for at least one, and preferably for each, of the first and second alternating switches (AL, BL).

13. Device according to Claim 12, **characterized in that**, for an overvoltage protection at the point of an alternating switch (AI, BL), series circuitry is provided comprising a capacitor (CA, CB) and a diode (DA, DB) and whose cathode side is connected to said common point (8) and whose anode side is connected to the pole of the alternating switch (AL, BL) connected to the corresponding extreme terminal (2, 3) by an auxiliary winding (5C, 5D) of the autotransformer (1).

14. Use of the device according to any one of Claims 7 to 9, **characterized in that**: said device is powered by applying a direct current voltage (V2) between said other pole (12) and, depending on the case, the common point (8) or a connection of a smoothing coil (L2) whose other connection is linked to said common point (8), and there are organized

   - a pair of switches comprising said second alternating switch (BL), positioned between the other pole (12) of the source (7) and the second extreme terminal (3), and the auxiliary switch (AH) which links the first extreme terminal (2) and the common point (8), and
   - another pair of switches comprising said first alternating switch (AL), positioned between the other pole (12) of the source (7) and the first extreme terminal (2), and the auxiliary switch (BH) which links the second extreme terminal (3) to the common point (8), the switch control means are programmed to render, simultaneously and alternately, the switches of one pair on and the switches of the other pair off, and vice versa, and
   - a starting source direct current voltage (V1) is collected at the abovementioned poles (6, 12) to power another device.

15. Use of the device according to any one of Claims 7 to 9, **characterized in that**: said device is powered by applying a direct current voltage (V2) between said pole (12) and, depending on the case, the common point (8) or a connection of a smoothing coil (L2) whose other connection is linked to said common point (8), either the two alternating switches (AL, BL) are eliminated or they are kept off, the switch control means are programmed to render, simultaneously and alternately, one auxiliary switch (AH, BH) on and the other auxiliary switch (BH, AH) off, and vice versa, and a starting source direct current voltage (V1) is collected at the abovementioned poles (6, 12) to power another device.

**Patentansprüche**

1. Verfahren zur Umwandlung einer Ausgangsgleichspannung (V1) in eine andere Gleichspannung (V2), insbesondere, damit die andere Gleichspannung (V2) doppelt so groß wie die Ausgangsgleichspannung (V1) ist, wobei das Verfahren enthält:

   - eine Wahl eines Autotransformators (1), der eine erste und eine zweite Endklemme (2, 3) und eine Zwischenklemme (4) aufweist,
   - einen Anschluss eines Pols (6) einer Quelle (7) der Ausgangsgleichspannung (V1) an die Zwischenklemme (4),
   - eine Einrichtung eines gemeinsamen Punkts (8), der mit jeder der zwei Endklemmen (2, 3) verbunden ist,
   - einen Anschluss des anderen Pols (12) der Quelle (7) der Ausgangsgleichspannung (V1), abwechselnd und aufeinanderfolgend, an jede der ersten und zweiten Endklemmen (2, 3),
- ein Sammeln der anderen Gleichspannung (V2) zwischen dem anderen Pol (12) und dem gemeinsamen Punkt (8),

**dadurch gekennzeichnet, dass** der gemeinsame Punkt (8) mit jeder der zwei Endklemmen (2, 3) über einen jeweils anderen getrennten Hilfsschalter (AH, BH) verbunden ist, und dass gleichzeitig mit dem abwechselnden und aufeinanderfolgenden Anschluss des anderen Pols der Quelle (7) der Ausgangsgleichspannung (V1) jeder Hilfsschalter (AH, BH) abwechselnd betätigt wird, damit beim Anschluss des anderen Pols (12) an die zweite Endklemme (3) einer (AH) leitend und der andere (BH) sperrend ist, und damit beim Anschluss des anderen Pols (12) an die erste Endklemme (2) einer (AH) sperrend und der andere (BH) leitend ist.

2.  Verfahren nach Anspruch 1, **dadurch gekennzeichnet, dass** es eine Glättung der anderen Gleichspannung (V2) durch die Anordnung einer Spule (L2, L1) enthält:

    - entweder zwischen dem gemeinsamen Punkt (8) und einer Klemme (16) eines Nutzungsgeräts der anderen Gleichspannung (V2),
    - oder zwischen der Zwischenklemme (4) des Autotransformators (1) und dem zugeordneten Pol (6) der Quelle (7) der Ausgangsgleichspannung (V1),
    - oder zwischen einer Klemme (18) eines Nutzungsgeräts der anderen Gleichspannung (V2) und dem anderen Pol (12) der Quelle (7) der Ausgangsgleichspannung (V1), der abwechselnd mit den zwei Endklemmen (2, 3) verbunden ist.

3.  Verfahren nach dem einen oder anderen der Ansprüche 1 und 2, **gekennzeichnet durch** einen Anschluss einer Diode (11) zwischen der Zwischenklemme (4) und dem gemeinsamen Punkt (8).

4.  Vorrichtung zur Umwandlung einer Ausgangsgleichspannung (V1) in eine andere Gleichspannung (V2), die insbesondere zur Durchführung des Verfahrens nach einem der Ansprüche 1 bis 3 bestimmt ist, wobei die Vorrichtung enthält

    - einen Autotransformator (1), der erste und zweite Endklemmen (2, 3) und eine Zwischenklemme (4) aufweist, die eingerichtet sind, um mit zwei Polen (6, 12) einer Quelle (7) einer Ausgangsgleichspannung (V1) verbunden zu werden,
    - eine Verbindung eines der Pole (6) der Quelle (7) mit der Zwischenklemme (4),

    - einen ersten Wechselschalter (AL), der zwischen dem anderen Pol (12) der Quelle (7) und der ersten Endklemme (2) angeordnet ist,
    - einen zweiten Wechselschalter (BL), der zwischen dem anderen Pol (12) der Quelle (7) und der zweiten Endklemme (3) angeordnet ist,
    - eine Steuereinrichtung der zwei Wechselschalter (AL, BL), die eingerichtet ist, um abwechselnd und aufeinanderfolgend den einen leitend und gleichzeitig den anderen sperrend zu machen und umgekehrt,

    wobei die andere Gleichspannung (V2) zwischen dem anderen Pol (12) und dem gemeinsamen Punkt (8) verfügbar ist,
    **dadurch gekennzeichnet, dass** sie auch einen getrennten Hilfsschalter (AH, BH) zwischen jeder der zwei Endklemmen (2, 3) und einem gemeinsamen Punkt (8) aufweist, wobei die Steuereinrichtung eingerichtet ist, um abwechselnd die zwei Hilfsschalter (AH, BH) den einen leitend, während der andere gesperrt ist, und umgekehrt, zu machen, in Verbindung mit der Steuerung der zwei Wechselschalter (AL, BL).

5.  Vorrichtung nach Anspruch 4, **dadurch gekennzeichnet, dass** sie jedes Mal eine Diode (23, 24) in Parallelschaltung mit dem ersten und dem zweiten Wechselschalter (AL, BL) aufweist.

6.  Vorrichtung nach dem einen oder anderen der Ansprüche 4 und 5, **dadurch gekennzeichnet, dass** sie eine Hilfsdiode (11) aufweist, die zwischen der Zwischenklemme (4) und dem gemeinsamen Punkt (8) angeordnet ist.

7.  Vorrichtung nach dem einen oder anderen der Ansprüche 4 und 5, **dadurch gekennzeichnet, dass** jeder Hilfsschalter (AH, BH) parallel mit einer der zwei Dioden (9, 10) angeordnet ist, die auch eine Endklemme (2, 3) mit dem gemeinsamen Punkt (8) verbinden.

8.  Vorrichtung nach einem der Ansprüche 4 bis 7, **dadurch gekennzeichnet, dass** sie eine Glättungsspule (L2, L1) aufweist:

    - entweder zwischen dem gemeinsamen Punkt (8) und einer Klemme (16) eines Nutzungsgeräts der anderen Gleichspannung (V2),
    - oder zwischen der Zwischenklemme (4) des Autotransformators (1) und dem zugeordneten Pol (6) der Quelle (7) der Ausgangsgleichspannung (V1),
    - oder zwischen einer Klemme (18) eines Nutzungsgeräts der anderen Gleichspannung (V2) und dem anderen Pol (12) der Quelle (7) der Ausgangsgleichspannung (V1), der abwechselnd mit den zwei Endklemmen (2, 3) verbunden ist.

9. Vorrichtung nach einem der Ansprüche 4 bis 8, **dadurch gekennzeichnet, dass** sie einen Kondensator (C1, C2) zwischen den zwei Polen (6, 12) der Quelle (7) und/oder zwischen deren anderem Pol (12) und dem gemeinsamen Punkt (8), oder ggf. eine Verbindung einer Glättungsspule (L2) aufweist, deren andere Verbindung mit dem gemeinsamen Punkt (8) verbunden ist.

10. Vorrichtung nach Anspruch 4 oder 5, **dadurch gekennzeichnet, dass** der Autotransformator (1) außerdem aufweist:

   - eine erste Hilfswicklung (5C), die zwischen der ersten Endklemme (2) und dem ersten Wechselschalter (AL) angeschlossen ist, und
   - eine zweite Hilfswicklung (5D), die zwischen der zweiten Endklemme (3) und dem zweiten Wechselschalter (BL) angeschlossen ist.

11. Vorrichtung nach Anspruch 10, **dadurch gekennzeichnet, dass** sie eine Glättungsspule (L1) zwischen der Zwischenklemme (4) und dem zugeordneten Pol (6) der Quelle der Ausgangsgleichspannung (V1) aufweist.

12. Vorrichtung nach dem einen oder anderen der Ansprüche 10 und 11, **dadurch gekennzeichnet, dass** sie außerdem eine Schutzschaltung gegen eine Überspannung für mindestens einen, vorzugsweise jeden, der ersten und zweiten Wechselschalter (AL, BL) aufweist.

13. Vorrichtung nach Anspruch 12, **dadurch gekennzeichnet, dass**, für einen Schutz vor einer Überspannung an der Stelle eines Wechselschalters (Al, BL), eine Reihenschaltung vorgesehen ist, die einen Kondensator (CA, CB) und eine Diode (DA, DB) aufweist, und deren Kathodenseite an den gemeinsamen Punkt (8) angeschlossen ist und deren Anodenseite an den Pol des Wechselschalters (AL, BL) angeschlossen ist, der an die entsprechende Endklemme (2, 3) durch eine Hilfswicklung (5C, 5D) des Autotransformators (1) angeschlossen ist.

14. Verwendung der Vorrichtung nach einem der Ansprüche 7 bis 9, **dadurch gekennzeichnet, dass**:

   die Vorrichtung gespeist wird, indem eine Gleichspannung (V2) zwischen den anderen Pol (12) und, je nachdem, den gemeinsamen Punkt (8) oder eine Verbindung einer Glättungsspule (L2) angelegt wird, deren andere Verbindung mit dem gemeinsamen Punkt (8) verbunden ist, organisiert wird:

   - ein Paar von Schaltern, das den Wechselschalter (BL), angeordnet zwischen dem anderen Pol (12) der Quelle (7) und der zweiten Endklemme (3), und den Hilfsschalter (AH) aufweist, der die erste Endklemme (2) und den gemeinsamen Punkt (8) verbindet, und
   - ein weiteres Paar von Schaltern, das den ersten Wechselschalter (AL), angeordnet zwischen dem anderen Pol (12) der Quelle (7) und der ersten Endklemme (2), und den Hilfsschalter (BH) aufweist, der die zweite Endklemme (3) mit dem gemeinsamen Punkt (8) verbindet, die Steuereinrichtung der Schalter programmiert wird, um gleichzeitig und abwechselnd die Schalter eines Paars leitend und die Schalter des anderen Paars sperrend zu machen und umgekehrt, und
   - an den erwähnten Polen (6, 12) eine Ausgangsquellengleichspannung (V1) gesammelt wird, um eine andere Vorrichtung zu speisen.

15. Verwendung der Vorrichtung nach einem der Ansprüche 7 bis 9, **dadurch gekennzeichnet, dass**:

   die Vorrichtung gespeist wird, indem eine Gleichspannung (V2) zwischen dem Pol (12) und, je nachdem, dem gemeinsamen Punkt (8) oder einer Verbindung einer Glättungsspule (L2) angelegt wird, deren andere Verbindung mit dem gemeinsamen Punkt (8) verbunden ist, entweder die zwei Wechselschalter (AL, BL) weggelassen oder sperrend gehalten werden, die Steuereinrichtung der Schalter programmiert wird, um gleichzeitig und abwechselnd einen Hilfsschalter (AH, BH) leitend und den anderen Hilfsschalter (BH, AH) sperrend zu machen und umgekehrt, und an den erwähnten Polen (6,12) eine Ausgangsquellengleichspannung (V1) gesammelt wird, um eine andere Vorrichtung zu speisen.

Figure 1:

Figure 2:

Figure 3:

Figure 4:

16

D

[80V..160V] / 2 [40V..80V] DC/AC $V_{out}$

18 12

Figure 5:

6

D

[20V..40V] x 2 [40V..80V] DC/AC $V_{out}$

12 18

Figure 6:

Figure 7:

Figure 8:

Figure 9:

Figure 10:

Figure 11:

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4245286 A